# EUROPEAN PATENT SPECIFICATION

(11) **EP 3 826 323 B1**
(45) Date of publication and mention of the grant of the patent: **06.09.2023**
(21) Application number: 20182065.1
(22) Date of filing: 24.06.2020
(51) Int. Cl.: H04R 1/10, G09B 5/06

(54) **INTERACTIVE AUDIOBOOK WITH PUSH-PULL STYLE MECHANISM**
INTERAKTIVES HÖRBUCH MIT DRUCK-ZUG-MECHANISMUS
LIVRE AUDIO INTERACTIF AVEC MECHANISM POUSSER-TIRER

(30) Priority: 21.11.2019 CN 201911149599
(43) Date of publication of application: 26.05.2021
(73) Proprietor: Heshan Astros Printing Ltd., Heshan, Guangdong 529700 (CN); Leo Paper Bags Manufacturing (1982) Limited, Hong Kong (CN)
(72) Inventor: Yeung, Nin Hong, Hong Kong, Hong Kong (CN); Mak, Ka Kit Louis, Hong Kong, Hong Kong (CN)
(74) Representative: Zoli, Filippo

(56) References cited:
- EP-A1- 2 728 566
- WO-A1-98/35332
- GB-A- 2 309 932
- Nina Starost: "Pop-up-Bücher; Alles Buch, Studien der Erlanger Buchwissenschaften XIV", , 31 January 2005 (2005-01-31), XP055755867, ISBN: 978-3-9809664-4-3 Retrieved from the Internet: URL:https://opus4.kobv.de/opus4-fau/files/ 5842/Alles%20Buch%20Band%2014_Starost.pdf [retrieved on 2020-12-02]

## Description

### TECHNICAL FIELD

The disclosure relates to an electronic audio device, in particular to a push-pull style interactive audiobook.

### BACKGROUND

Audio e-books, as a kind of educational books product, are popular for parents and children that help children develop their vision and hearing. By pressing the buttons on those audio e-books, audio or music related to the reading is played, this is more interesting and interactive than those traditional reading materials, introducing more fun to traditional learning and entertainment. However, those audio e-books are not interesting to operate as being limited to press the buttons.

GB2309932A discloses book or board game with a sound generation system. The book or game includes a movable image element 20 (Fig 5) or playing pieces 77 (Fig 14) which generate a sound when moved. The image element 20 includes an electrode 25 movable, by means of manual actuating tab 22, with respect to electrodes 26, 27 in a folded double-page sheet. Contact or capacitively coupling between the electrodes generates a sound through circuits 28, 29 linked to a sound synthesiser in the book cover or externally. The image element may form part of a pop-up device (51, Fig 12). The playing pieces 77 include electrodes 78 which link capacitively with electrodes 76 in the areas 74,75 of the game board 71 that the pieces are to be located, the sound generated being characteristic of the piece.

EP2728566A1 discloses a book assembly with slider-activated switch. The book assembly includes a track, a slider, and a switch. The slider is visible and can be slid along the track by a user such as a child. The switch is activated by moving the slider in the track. Activating the switch plays a sound or lights a light.

### SUMMARY

The disclosure aims to solve or alleviate at least one of the technical problems in part. In view of this, the invention provides a push-pull style interactive audiobook according to claim 1. Further embodiments are defined in the dependent claims.

In the embodiments of the disclosure, there is provided, a push-pull style interactive audiobook, including a body, and a push-pull member. A speaker, a controller with storage for storing audio file, and a trigger switch circuit are respectively arranged in the body, in which, both the speaker and the trigger switch circuit are connected to the controller. A trigger is arranged at one end of the push-pull member. The body is provided with a track slot shaped and dimensioned for containing the push-pull member, so as to allow the push-pull member to slide along the track slot. The controller is configured to output the audio file to the speaker for playing in response to the switch-on of the trigger switch circuit caused by the trigger during movement of the push-pull member along the track slot.

In this embodiment, the push-pull member is moved along the track slot by the users and reaches the position where the trigger triggers the trigger switch circuit to switch-on, causing the audio to be played. As compared to those audiobooks triggered by pressing buttons, the push-pull interactive audiobook according to the disclosure is more interesting and interactive, thus motivating children's interest in learning.

In some embodiments, the trigger switch circuit is a printed film circuit having a connection portion arranged within the track slot for electrical connection, and the trigger switch circuit is disconnected in a normal status. The trigger includes a conductive portion made of conductive material such as conductive plastic, metal foil, printed conductive ink on PET, etc... The controller is configured to output the audio file to the speaker for playing in response to the switch-on of the trigger switch circuit caused by electrical connection between the conductive portion and the connecting portion during movement of the push-pull member along the track slot.

In some embodiments, the trigger switch circuit include a switch button arranged on the inner wall of the track slot. The controller is configured to output the audio file to the speaker for playing in response to the switch-on of the trigger switch circuit caused by contact of a side of the push-pull member and the switch button during movement of the push-pull member along the track slot.

In some embodiments, the trigger switch circuit includes a Hall sensor. The trigger is a magnet. The controller is configured to output the audio file to the speaker for playing in response to the switch-on of the trigger switch circuit caused by induction of the Hall sensor through the magnet during movement of the push-pull member along the track slot.

According to the invention, the track slot extends to a side face of the body, a cover plate is arranged above the track slot, and the cover plate is coplanar with upper surface of the body, such that an opening is formed on side face of the body by the track slot.

The push-pull member is disposed in the track slot and is positioned below the cover plate. One end of the push-pull member stretches out from the opening formed by the track slot.

In some embodiments, the cover plate is provided with a hole configured for observation. The push-pull member has a patterned face toward the observation hole. The pattern on the patterned face is shown from the hole as the push-pull member moves.

In some embodiments, the body includes a cover, a plurality of pages and a bottom. The pages may be disposed between the cover and the bottom. The cover and the pages are connected with one side of the bottom, and are rotatable about the side of the bottom.

In some embodiments, the speaker and the controller are positioned in the bottom. The track slot is positioned on the pages.

In some embodiments, the body is provided with a light assembly, and the controller stores instructions for controlling the light assembly; and the controller is configured to output the instructions to the light assembly in response to the switch-on of the trigger switch circuit caused by the trigger during movement of the push-pull member along the track slot, so as to control the turn-on or turn-off of the light assembly.

The above and/or additional aspects and advantages of the disclosure will become apparent and easily understood from the description of the embodiments in conjunction with the annexed drawings.

### BRIEF DESCRIPTION OF THE DRAWINGS

Embodiments of the disclosure is described in detail with reference to the drawings in the following.
FIG. 1 is a structural diagram of a push-pull style interactive audiobook according to an embodiment of the disclosure;
FIG. 2 is a schematic diagram of a push-pull style interactive audiobook according to an embodiment of the disclosure;
FIG. 3 is another schematic diagram of a push-pull style interactive audiobook according to an embodiment of the disclosure;
FIG. 4 is another schematic diagram of a push-pull style interactive audiobook according to an embodiment of the disclosure.

### DETAILED DESCRIPTION

In this section, embodiments of the disclosure are described in detail with reference to the drawings, but the disclosure is not limited to those embodiments, and various modifications could be made within the scope of the appendent claims. In addition, unless otherwise specified, embodiments and features of embodiments of the disclosure could be combined with each other.

In case that orientation descriptions is referred to in the description of the disclosure, and those orientations or positional relationships, as indicated by terms such as "top", "bottom", "front", "rear", "left", "right", etc., are based on the orientations or positional relationships shown in the drawings, and they are intended for convenient and brief description merely, and they are not intended for any indication or suggestion that the referred device or element must have such a specific orientation, or be constructed and operated in such a specific orientation, and thus, those orientations or positional relationships shall not be construed as limitations to the disclosure.

In the description of the embodiment of the disclosure, the terms "greater than", "less than", "more than", and "over", if used, shall be interpreted as not including that number; and the term "above" and "below", if they are referred to, shall be interpreted as including that number. The term "first" and "second", if used, are intended for distinguishing the technical features, and they are neither intended for any indication or suggestion for relative importance or implicit indication for the number of technical features, nor for implicit indication for the sequence of technical features.

And terms such as "provide", "mount", "connect" and the like, if used herein, shall be understood in a broad sense, unless otherwise specified, and those skilled in the art can reasonably determine the specific meanings of those terms through the detailed technical solutions herein.

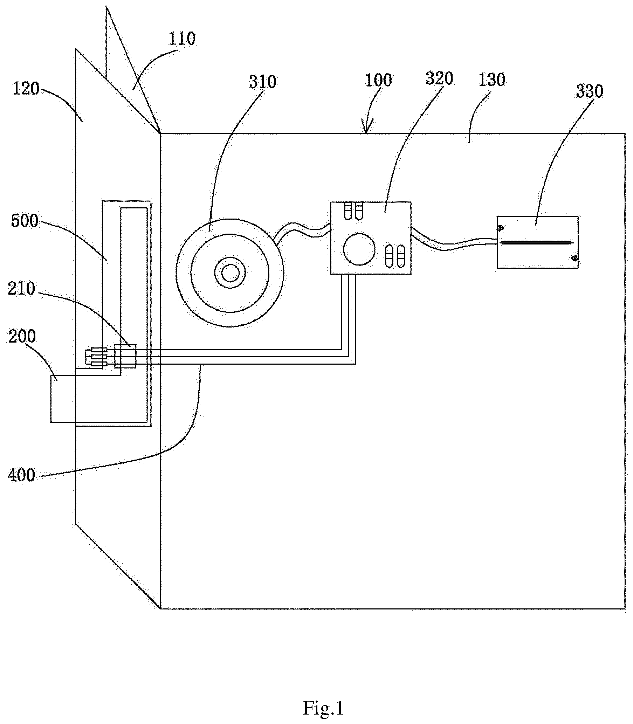

Referring to FIG. 1, in an embodiment of the present invention, there is provided a push-pull style interactive audiobook, including a body 100, and a push-pull member 200. A speaker 310, a controller 320 with storage for storing audio file, and a trigger switch circuit 400 are respectively arranged in the body 100, in which, both the speaker 310 and the trigger switch circuit 400 are connected to the controller 320. A trigger 210 is arranged at one end of the push-pull member 200. The body 100 is provided with a track slot 500 shaped and dimensioned for containing the push-pull member 200, so as to allow the push-pull member 200 to slide along the track slot 500. The controller 320 is configured to output the audio file to the speaker 310 for playing in response to the switch-on of the trigger switch circuit 400 caused by the trigger 210 during movement of the push-pull member 200 along the track slot 500.

In this embodiment, the push-pull member 200 is moved along the track slot 500 by the users and reaches the position where the trigger 210 triggers the trigger switch circuit 400 to switch-on, causing the audio to be played. As compared to those audiobooks triggered by pressing buttons, the push-pull interactive audiobook according to the disclosure is more interesting and interactive, thus motivating children's interest in learning.

In addition, the body 100 is further provided with a light assembly including a plurality of light components. The controller 320 stores instructions for controlling the light components. The push-pull member 200 slides along the track slot 500 and reaches the position where the trigger 210 triggers the trigger switch circuit 400 to switch-on, causing the light control instructions to be output from the controller 320 to turn the light components on or off , thus forming various patterns.

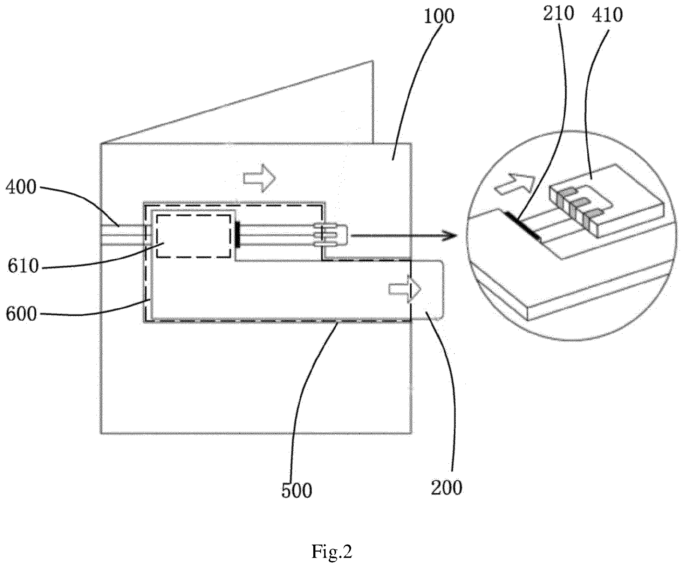

Referring to FIG. 2, in one embodiment, the trigger switch circuit 400 is a printed film circuit having a connection portion 410 arranged within the track slot 500 for electrical connection, and the trigger switch circuit 400 is disconnected in a normal status. The trigger 210 includes a conductive portion made of conductive material such as conductive plastic, metal foil, printed conductive ink on PET, etc.... The controller 320 is configured to output the audio file to the speaker 320 for playing in response to the switch-on of the trigger switch circuit 400 caused by electrical connection between the conductive portion and the connecting portion 410 during movement of the push-pull member 200 along the track slot 500.

In some embodiments, a plurality of printed thin film circuits may be arranged on the body, and accordingly, conductive portions of conductive material such as conductive plastic, metal foil, printed conductive ink on PET, etc... may be arranged on the push-pull member 200 at corresponding positions. The connection portion 410 of each of the plurality of printed thin film circuits may be respectively positioned at corresponding position of the track slot 500. Corresponding printed film circuit would be switched on by the contact of the electrical contact(s) of the connection portion 410 of the printed film circuit with the electrical contact(s) of the trigger, such that, the audio is played through the speaker 310 in response to the switch-on of the trigger switch circuit 400. The contact(s) of the conductive portion would not contact the contacts of the connection portion unless the conductive portion contacts the connection portion. Signals are generated in response to the switch-on of the printed film circuits and are sent to the controller 320. In response to each of the received signals, the controller 320 searches for the audio file in the storage corresponding to the received signal, such that audio is played through the speaker 310 based on the switch-on of a corresponding printed film circuit.

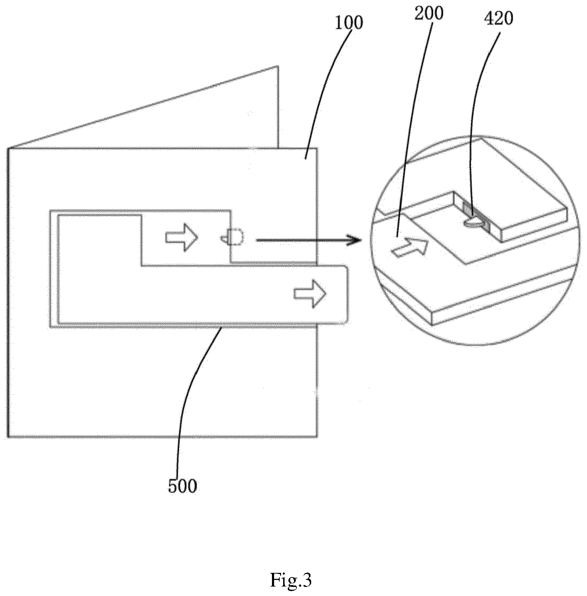

Referring to FIG. 3, in some embodiments, the trigger switch circuit 400 may include a switch button 420 arranged on the inner wall of the track slot 500. The controller 320 is configured to output the audio file to the speaker 310 for playing in response to the switch-on of the trigger switch circuit 400 caused by contact of a side of the push-pull member 200 and the switch button 420 during movement of the push-pull member 200 along the track slot 500.

In addition, a plurality of switch buttons 420 may be position at different positions on the inner side wall along the track slot 500. The side of the push-pull member 200 would contact the switch button 420 as the push-pull member 200 moves. And only one single switch button 420 would contact with the push-pull member 200 contacts at the same moment due to the limiting by the track slot 500. The switch button 420 would return to its initial position without being pressed, such that the trigger switch circuit 400 is disconnected.

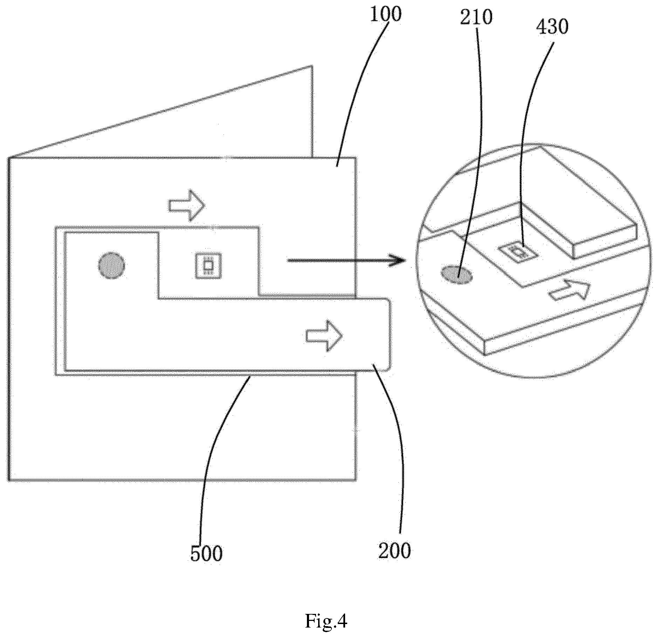

Referring to FIG. 4, in another embodiment, the trigger switch circuit 400 may include a Hall sensor 430. The trigger 210 is a magnet. The controller 320 is configured to output the audio file to the speaker 310 for playing in response to the switch-on of the trigger switch circuit 400 caused by induction of the Hall sensor 430 through the magnet during movement of the push-pull member 200 along the track slot 500.

In addition, a plurality of Hall sensors 430 may be respectively arranged at different positions on the body 100. Whereas the sensing ranges of the Hall sensors 430 in the track slot 500 do not overlap with each other, that is, only one Hall sensor 430 would be triggered at the same moment as the push-pull member 200 moves along the track slot 500.

According to the invention, In the track slot 500 extends to a side face of the body 100, a cover plate 600 covering the track slot 500 is arranged above the track slot 500, and the cover plate 600 is coplanar with upper surface of the body 100, such that an opening is formed on side face of the body 100 by the track slot 500. The pulling member engages with the track slot 500, and would not be readily detached and missed from the track slot 500.

The push-pull member 200 is disposed in the track slot 500 and is positioned below the cover plate 600. One end of the push-pull member 200 stretches out from the opening formed by the track slot 500. The user pulls the push-pull member 200 on its end, thus moves the push-pull member 200.

The cover plate 600 may be further provided with a hole 610 configured for observation. The push-pull member 200 has a patterned face toward the observation hole 610. The pattern on the patterned face is shown from the hole 610 as the push-pull member 200 moves. The pattern shown from the hole 100 changes as the push-pull member 200 moves. The changing pattern, together with the patterns presented on the body 100 and/or the audio played by the speaker 310, enhances the interest and interactivity of the push-pull style interactive audiobook of the disclosure.

In another embodiment, the body 100 may include a cover 110, a plurality of pages 120 and a bottom 130. The pages 120 may be disposed between the cover 110 and the bottom 130. The cover 110 and the pages 120 are connected with one side of the bottom 130, and are rotatable about the side of the bottom. The trigger switch circuit 400 is connected with the controller 320 by the wire(s) passing through the portion where the pages 120 engages with the bottom 130. It should be noted that the portion where the page 120 engages with the bottom 130 is thickened.

In some embodiments, the speaker 310 and the controller 320 are positioned in the bottom 130. The track slot 500 is positioned on the pages 120.

In some embodiments, a power module 330 configured for supplying power to the speaker 310, the controller 320, and the trigger switch circuit 400, is arranged in the body 100. The power module 330 may be a battery or a plug.

It should be understood, however, that the detailed description and specific examples, while indicating exemplary embodiments, are given for purposes of illustration only and not of limitation. Many changes and modifications be made without departing from the scope of the appendent claims.

## Claims

1. A push-pull style interactive audiobook, comprising a body (100), a push-pull member (200), a speaker (310) arranged in the body (100), a controller (320) storing audio file, and a trigger switch circuit (400); wherein, both the speaker (310) and the trigger switch circuit (400) are connected to the controller (320); the body (100) comprises a track slot (500), and the push-pull member (200) comprises a trigger (210); wherein, the controller (320) is configured to output the audio file to the speaker (310) for playing in response to switch-on of the trigger switch circuit (400) caused by the trigger (210) during movement of the push-pull member (200) along the track slot (500),
**characterized in that**,
the track slot (500) extends to a side face of the body (100), a cover plate (600) is arranged above the track slot (500), and the cover plate (600) is coplanar with an upper surface of the body (100), such that an opening is formed on the side face of the body (100) by the track slot (500), and
the push-pull member (200) is disposed in the track slot (500) and is positioned below the cover plate (600), and one end of the push-pull member (200) stretches out from the opening formed by the track slot (500).

2. The push-pull style interactive audiobook of claim 1, wherein, the trigger switch circuit (400) is a printed film circuit having a connection portion (410) arranged within the track slot (500), and the trigger (210) comprises a conductive portion made of conductive plastic; wherein, the controller (320) is configured to output the audio file to the speaker (310) for playing in response to switch-on of the trigger switch circuit (400) caused by electrical connection between the conductive portion and the connecting portion during movement of the push-pull member (200) along the track slot (500).

3. The push-pull style interactive audiobook of claim 1, wherein, the trigger switch circuit (400) comprises a switch button (420) arranged on an inner wall of the track slot (500); wherein, the controller (320) is configured to output the audio file to the speaker (310) for playing in response to switch-on of the trigger switch circuit (400) caused by contact of a side of the push-pull member (200) and the switch button (420) during movement of the push-pull member (200) along the track slot (500).

4. The push-pull style interactive audiobook of claim 1, wherein, the trigger switch circuit (400) comprises a Hall sensor (430), and the trigger (210) is a magnet; wherein, the controller (320) is configured to output the audio file to the speaker (310) for playing in response to switch-on of the trigger switch circuit (400) caused by induction of the Hall sensor (430) through the magnet during movement of the push-pull member (200) along the track slot (500).

5. The push-pull style interactive audiobook of claim 1, wherein, the cover plate (600) is provided with a hole (610) configured for observation, the push-pull member (200) has a patterned face toward the hole (610), patterns on the patterned face are shown from the hole (610) during movement of the push-pull member (200).

6. The push-pull style interactive audiobook of claim 1, wherein, the body (100) comprises a cover (110), a plurality of pages (120) and a bottom (130); the pages (120) are disposed between the cover (110) and the bottom (130); the cover (110) and the pages (120) are connected with one side of the bottom (130), and are rotatable about the side of the bottom (130).

7. The push-pull style interactive audiobook of claim 6, wherein, the speaker (310) and the controller (320) are positioned in the bottom (130), and the track slot (500) is positioned on the pages (120).

8. The push-pull style interactive audiobook of claim 1, wherein, the body (100) is provided with a light assembly, and the controller (320) stores instructions for controlling the light assembly; and the controller (320) is configured to output the instructions to the light assembly in response to switch-on of the trigger switch circuit (400) caused by the trigger (210) during movement along the track slot (500) of the push-pull member (200), so as to control turn-on or turn-off of the light assembly.

## Patentansprüche

1. Interaktives Hörbuch im Push-Pull-Stil, umfassend einen Körper (100), ein Push-Pull-Element (200), einen in dem Körper (100) angeordneten Lautsprecher (310), eine Steuerung (320), die eine Audiodatei speichert, und eine Auslöseschalterschaltung (400); wobei sowohl der Lautsprecher (310) als auch die Auslöseschalterschaltung (400) mit der Steuerung (320) verbunden sind; der Körper (100) einen Spurschlitz (500) umfasst, und das Push-Pull-Element (200) einen Auslöser (210) umfasst; wobei die Steuerung (320) konfiguriert ist, um die Audiodatei an den Lautsprecher (310) auszugeben, um sie als Reaktion auf ein Einschalten der Auslöseschalterschaltung (400), das durch den Auslöser (210) während einer Bewegung des Push-Pull-Elements (200) entlang des Spurschlitzes (500) bewirkt wird, abzuspielen,
**dadurch gekennzeichnet, dass**
sich der Spurschlitz (500) zu einer Seitenfläche des Körpers (100) erstreckt, eine Abdeckplatte (600) über dem Spurschlitz (500) angeordnet ist, und die Abdeckplatte (600) koplanar mit einer oberen Fläche des Körpers (100) ist, sodass auf der Seitenfläche des Körpers (100) durch den Spurschlitz (500) eine Öffnung gebildet wird, und
das Push-Pull-Element (200) in dem Spurschlitz (500) angeordnet ist und unter der Abdeckplatte (600) positioniert ist, und sich ein Ende des Push-Pull-Elements (200) aus der durch den Spurschlitz (500) gebildeten Öffnung sich erstreckt.

2. Interaktives Hörbuch im Push-Pull-Stil nach Anspruch 1, wobei die Auslöseschalterschaltung (400) eine Schichtschaltung ist, die einen Verbindungsabschnitt (410) aufweist, der innerhalb des Spurschlitzes (500) angeordnet ist, und der Auslöser (210) einen leitenden Abschnitt umfasst, der aus leitendem Kunststoff gefertigt ist; wobei die Steuerung (320) konfiguriert ist, um die Audiodatei als Reaktion auf ein Einschalten der Auslöseschalterschaltung (400), das durch eine elektrische Verbindung zwischen dem leitenden Abschnitt und dem Verbindungsabschnitt während einer Bewegung des Push-Pull-Elements (200) entlang des Spurschlitzes (500) bewirkt wird, zum Abspielen an den Lautsprecher (310) auszugeben.

3. Interaktives Hörbuch im Push-Pull-Stil nach Anspruch 1, wobei die Auslöseschalterschaltung (400) einen Schaltknopf (420) umfasst, der an einer Innenwand des Spurschlitzes (500) angeordnet ist; wobei die Steuerung (320) konfiguriert ist, um die Audiodatei als Reaktion auf ein Einschalten der Auslöseschalterschaltung (400), das durch den Kontakt einer Seite des Push-Pull-Elements (200) und des Schaltknopfes (420) während der Bewegung des Push-Pull-Elements (200) entlang des Spurschlitzes (500) bewirkt wird, zum Abspielen an den Lautsprecher (310) auszugeben.

4. Interaktives Hörbuch im Push-Pull-Stil nach Anspruch 1, wobei die Auslöseschalterschaltung (400) einen Hall-Sensor (430) umfasst und der Auslöser (210) ein Magnet ist; wobei die Steuerung (320) konfiguriert ist, um die Audiodatei als Reaktion auf ein Einschalten der Auslöseschalterschaltung (400), das durch Induktion des Hall-Sensors (430) durch den Magneten während einer Bewegung des Push-Pull-Elements (200) entlang des Spurschlitzes (500) verursacht wird, zum Abspielen an den Lautsprecher (310) auszugeben.

5. Interaktives Hörbuch im Push-Pull-Stil nach Anspruch 1, wobei die Abdeckplatte (600) mit einem Loch (610) versehen ist, das zur Beobachtung konfiguriert ist, das Push-Pull-Element (200) eine gemusterte, dem Loch (610) zugewandte Fläche aufweist, die Muster auf der gemusterten Fläche während einer Bewegung des Push-Pull-Elements (200) von dem Loch (610) aus gezeigt werden.

6. Interaktives Hörbuch im Push-Pull-Stil nach Anspruch 1, wobei der Körper (100) ein Cover (110), eine Vielzahl von Seiten (120) und einen Boden (130) umfasst; die Seiten (120) zwischen dem Cover (110) und dem Boden (130) angeordnet sind; das Cover (110) und die Seiten (120) mit einer Seite des Bodens (130) verbunden sind und um die Seite des Bodens (130) drehbar sind.

7. Interaktives Hörbuch im Push-Pull-Stil nach Anspruch 6, wobei der Lautsprecher (310) und die Steuerung (320) in dem Boden (130) positioniert sind und der Spurschlitz (500) auf den Seiten (120) positioniert ist.

8. Interaktives Hörbuch im Push-Pull-Stil nach Anspruch 1, wobei der Körper (100) mit einer Lichtanordnung versehen ist und die Steuerung (320) Anweisungen zum Steuern der Lichtanordnung speichert; und die Steuerung (320) konfiguriert ist, um die Anweisungen als Reaktion auf ein Einschalten der Auslöseschalterschaltung (400), das während einer Bewegung entlang des Spurschlitzes (500) des Push-Pull-Elements (200) durch den Auslöser (210) verursacht wird, um ein Einschalten oder Ausschalten der Lichtanordnung zu steuern, an die Lichtanordnung auszugeben.

## Revendications

1. Livre audio interactif de type à traction, comprenant un corps (100), un élément de traction (200), un haut-parleur (310) disposé dans le corps (100), un contrôleur (320) stockant un fichier audio, et un circuit de commutateur à gâchette (400) ; dans lequel le haut-parleur (310) et le circuit de commutateur à gâchette (400) sont tous les deux connectés au contrôleur (320) ; le corps (100) comprenant une rainure (500), et l'élément de traction (200) comprenant un déclencheur (210) ; dans lequel, le contrôleur (320) étant configuré pour émettre le fichier audio vers le haut-parleur (310) pour lecture en réponse à l'activation du circuit de commutateur à gâchette (400) causée par le déclencheur (210) pendant le mouvement de l'élément de traction (200) le long de la rainure (500),
**caractérisé en ce que**,
la rainure (500) s'étend à une face latérale du corps (100), une plaque de recouvrement (600) étant disposée au-dessus de la rainure (500), et la plaque de recouvrement (600) étant coplanaire avec une surface supérieure du corps (100), de sorte qu'une ouverture est formée sur la face latérale du corps (100) par la rainure (500), et
l'élément de traction (200) étant disposé dans la rainure (500) et positionné sous la plaque de recouvrement (600), et une extrémité de l'élément de traction (200) s'étendant à partir de l'ouverture formée par la rainure (500).

2. Livre audio interactif de type à traction selon la revendication 1, dans lequel le circuit de commutateur à gâchette (400) est un circuit de film imprimé ayant une partie de connexion (410) disposée dans la rainure (500), et le déclencheur (210) comprenant une partie conductrice en matière plastique conducteur ; dans lequel le contrôleur (320) est configuré pour émettre le fichier audio vers le haut-parleur (310) pour lecture en réponse à l'activation du circuit de commutateur à gâchette (400) causée par la connexion électrique entre la partie conductrice et la partie de connexion pendant le mouvement de l'élément de traction (200) le long de la rainure (500).

3. Livre audio interactif de type à traction selon la revendication 1, dans lequel le circuit de commutateur à gâchette (400) comprend un bouton de commutation (420) disposé sur une paroi intérieure de la rainure (500) ; dans lequel, le contrôleur (320) est configuré pour émettre le fichier audio vers le haut-parleur (310) pour lecture en réponse à l'activation du circuit de commutateur à gâchette (400) causée par le contact d'un côté de l'élément traction (200) et le bouton de commutation (420) pendant le mouvement de l'élément de traction (200) le long de la rainure (500).

4. Livre audio interactif de type à traction selon la revendication 1, dans lequel le circuit de commutateur à gâchette (400) comprend un capteur à effet Hall (430), et le déclencheur (210) est un aimant ; dans lequel le contrôleur (320) est configuré pour émettre le fichier audio vers le haut-parleur (310) pour lecture en réponse à l'activation du circuit de commutateur à gâchette (400) causée par l'induction du capteur à effet Hall (430) à travers l'aimant pendant le mouvement de l'élément de traction (200) le long de la rainure (500).

5. Livre audio interactif de type à traction selon la revendication 1, dans lequel la plaque de recouvrement (600) est pourvue d'un trou (610) configuré pour l'observation, l'élément de traction (200) ayant une face à motifs vers le trou (610), les motifs sur la face à motifs étant montrés à partir du trou (610) pendant le mouvement de l'élément de traction (200).

6. Livre audio interactif de type à traction selon la revendication 1, dans lequel le corps (100) comprend un couvercle (110), une pluralité de pages (120) et un fond (130) ; les pages (120) étant disposées entre le couvercle (110) et le fond (130) ; le couvercle (110) et les pages (120) étant reliés à un côté du fond (130), et pouvant être tournés autour du côté du fond (130).

7. Livre audio interactif de type à traction selon la revendication 6, dans lequel le haut-parleur (310) et le contrôleur (320) sont positionnés dans le fond (130), et la rainure (500) est positionnée sur les pages (120).

8. Livre audio interactif de type à traction selon la revendication 1, dans lequel le corps (100) est pourvu d'un dispositif d'éclairage, et le contrôleur (320) stocke des instructions destinées à contrôler le dispositif d'éclairage ; et le contrôleur (320) étant configuré pour transmettre les instructions au dispositif d'éclairage en réponse à l'activation du circuit de commutateur à gâchette (400) causée par le déclencheur (210) pendant le mouvement le long de la rainure (500) de l'élément de traction (200), de manière à contrôler l'allumage ou l'extinction du dispositif d'éclairage.
